# EUROPEAN PATENT SPECIFICATION

(11) **EP 2 813 051 B1**
(45) Date of publication and mention of the grant of the patent: **27.09.2017**
(21) Application number: 13704389.9
(22) Date of filing: 04.02.2013
(51) Int. Cl.: H04L 29/06, H04L 29/08

(54) **DYNAMIC SHARING OF A WEBSERVICE**
DYNAMISCHE VERTEILUNG EINES WEBDIENSTS
PARTAGE DYNAMIQUE D'UN SERVICE WEB

(30) Priority: 07.02.2012 US 201213368156
(43) Date of publication of application: 17.12.2014
(73) Proprietor: Vergic Group AB, 211 37 Malmö (SE)
(72) Inventor: LUNDE, Fredrik, S-211 37 Malmö (SE)
(74) Representative: Zacco Sweden AB
(86) International application number: PCT/EP2013/052115
(87) International publication number: WO 2013/117506

(56) References cited:
- WO-A1-2010/109151
- US-A1- 2011 276 619

## Description

### TECHNICAL FIELD

This application relates to a method, an apparatus and a computer program product for sharing a web service, and in particular to a method, an apparatus and a computer program product for dynamic sharing of an online service web page without granting access to a terminal.

### BACKGROUND

In today's society many companies invest heavily in establishing an electronic business focused at providing customers with electronic commerce possibilities. Many authorities are also looking to providing network enabled services such as offering various registrations and information services through computer enabled network services.

Electronic commerce, commonly known as e-commerce, ecommerce or e-comm, refers to the buying and selling of products or services over electronic systems such as the Internet and other computer networks. The most common form of E-commerce invested in by many companies is the establishment of an online shopping website. Online shopping is the process whereby consumers directly buy goods or services from a seller in real-time, without an intermediary service, over the Internet. It is a form of electronic commerce. An online shop, eshop, e-store, Internet shop, web shop, web store, online store, or virtual store evokes the physical analogy of buying products or services at a bricks-and-mortar retailer or in a shopping centre. The process is called business-to-consumer (B2C) online shopping. When a business buys from another business it is called business-to-business (B2B) online shopping.

Unlike when a customer enters a shopping centre or a boutique a customer who enters an online shop is basically left to his own devices to figure out where to find the wanted products, how to select them, to purchase them and how to pay for them as there is no shopping attendant physically present to offer help and advice.

It has been noted that many customers that browse an online shop can get confused, feel lost or generally be bewildered and sometimes cancel their browsing or purchasing prematurely. To overcome this various methods and systems have been disclosed on how to better offer the best service and assistance. Other scenarios also exist where a visitor can benefit from assistance or operator guidance. Examples of such scenarios are when a customer has questions regarding a product or there is a need to fill in complicated forms.

To accomplish providing operator guidance and assistance various client assistance systems have been disclosed wherein an operator can share the customer's or visitor's screen view. This allows for an operator to see exactly what the visitor is seeing and to take control of the visitor's computer to guide the visitor through the steps necessary to perform a specific operation.

Remote access can be explained as remote control of a computer by using another device connected via the internet or another network. This is widely used by many computer manufacturers and large businesses' help desks for technical troubleshooting of their visitors' problems.

Remote Desktop Services in Windows Server 2008 R2, formerly known as Terminal Services in Windows Server 2008 and previous versions, is one of the components of Microsoft Windows (both server and client versions) that allows a visitor to access applications and data on a remote computer over a network, using the Remote Desktop Protocol (RDP). Terminal Services is Microsoft's implementation of thin-client terminal server computing, where Windows applications, or even the entire desktop of the computer running Terminal Services, are made accessible to a remote client machine. The client can either be a full-fledged computer, running any operating system as long as the terminal services protocol is supported, or a barebone machine powerful enough to support the protocol (such as Windows FLP). With

terminal services, only the user interface of an application is presented at the client. Any input to it is redirected over the network to the server, where all application execution takes place. This is in contrast to appstreaming systems, like Microsoft Application Virtualization, in which the applications, while still stored on a centralized server, are streamed to the client on-demand and then executed on the client machine.

In computing, Virtual Network Computing (VNC) is a graphical desktop sharing system that uses the RFB (Remote Frame Buffer) protocol to remotely control another computer. It transmits the keyboard and mouse events from one computer to another, relaying the graphical screen updates back in the other direction, over a network. VNC is platform-independent - a VNC viewer on one operating system may connect to a VNC server on the same or any other operating system. There are clients and servers for many Graphic User Interface-based operating systems and for Java. Multiple clients may connect to a VNC server at the same time. Popular uses for this technology include remote technical support and accessing files on one's work computer from one's home computer, or vice versa.

Screen Sharing is a VNC client by Apple Inc. included as part of Mac OS X v10.5. It allows remote observance or control of any Macintosh machine on the local network that has Screen Sharing activated. It may also be used over the Internet via iChat. Because Screen Sharing is a VNC client, it may also be used to control any computer running a VNC server if the IP address of the target computer is known and accessible. Apple's Back to My Mac feature of MobileMe service offers Wide-Area Bonjour to allow Screen Sharing and File Sharing access beyond LAN.

US 2011/0276619 A1 discloses a system where an existing web server is used to allow one or more clients to view a remote computer's screen and control it (remoting). The web server can act as an intermediary to enable one computer to "take control" of a second computer by enabling the first computer (a client) to view the desktop session of the second computer (a host) and enable the first computer to act as master for input device input (e.g., keyboard input, mouse input, stylus input, etc.) for the second computer

These remote access systems all suffer from the drawback that they allow an operator to take control of a visitor's computer which requires an authentication procedure. Furthermore, the connections are liable to virus attacks (such as through scripting) as they allow the operator's computer or terminal to push content on to the visitor's terminal. Another drawback is that applications are executed on the visitor's computer which again requires that a trust relationship between the operator and the visitor is established and also opens up the visitor's computer to potential virus attacks.

There is thus a need for an operator to be able to give directions and sharing documents on a visitor's terminal without requiring any authentication or rendering the visitor's computer liable to virus attacks.

One such system is disclosed in the American Patent Application US 2011/0276900 that discloses a remote desktop sharing that allows a visitor to access applications and data on a remote computer over a network. An intermediary computer can communicate with a host computer and one or more client computers to facilitate remote desktop sharing. The host can send the intermediary computer an encoded key frame and encoded updates. The intermediary computer can decode the host screen data, and apply subsequent updates to the decoded image so that the intermediary computer has a near live host screen image in a first buffer. A second buffer on the intermediary computer can store an instance of a screen encoder for each client computer that has joined the session and the most current host image that the client computer has. The encoder compares the near live screen image and the stored client computer host image to create an encoded differential screen image update to pass to the client computer.

Another system is disclosed in the American Patent Application US 2011276619 that discloses a sharing of a desktop screen which is implemented on a Hypertext Transfer Protocol (HTTP) web server using variable interval GET and POST requests. Connection to a web server bypasses firewall or shared IP limitations. In the described HTTP/HTTPS only solution, an existing web server is used to allow one or more clients to view a remote computer's screen and control it (remoting). The web server can act as an intermediary to enable one computer to "take control" of a second computer by enabling the first computer (a client) to view the desktop session of the second computer (a host) and enable the first computer to act as master for input device input (e.g., keyboard input, mouse input, stylus input, etc.) for the second computer. These systems allow an operator to provide a visitor with content that the visitor is likely interested in, but it requires that a psychographic profile is generated for each visitor or the use of many cookies which can prove to be difficult in a secure environment, which is required by many online shops.

These remote access systems all suffer from the drawback that they allow an operator to take control of a visitor's computer which requires that a trust relationship between the operator and the visitor is established perhaps through an authentication procedure. Furthermore, the connections are liable to virus attacks (such as through scripting) as they allow the operator's computer or terminal to push content on to the visitor's terminal. Another drawback is that applications are executed on the visitor's computer which again requires that a trust relationship between the operator and the visitor is established and also opens up the visitor's computer to potential virus attacks. Yet another drawback is that they require that special software is installed on the visitor terminal or the operator terminal or both or a server or all three. Installing new software has a drawback in that changes to the existing network settings and firewall settings might be required.

There is thus a need for an operator to be able to give directions and sharing documents on a visitor's terminal without requiring any authentication or rendering the visitor's computer liable to virus attacks.

### SUMMARY

It is an object of the invention to provide an apparatus per claim 1-8 and a method per claim 9. The authors of the present application have realized, after inventive and insightful reasoning, that by utilizing an existing web service connection and protocol it is possible for an operator to be able to give directions and sharing documents on a visitor's terminal without requiring any authentication or rendering the visitor's computer liable to virus attacks. The server is enabled to proceed upon a passive acceptance by the visitor without inducing any risk of manipulation of the visitor's terminal.

One benefit of the teachings herein is that an operator is enabled to update a visitor's view without taking control of any part of the visitor's terminal. The operator is further able to do this or one specific and targeted visitor. The visitor does not have to take any special action at all, but simply remains logged on to the same web site. This is thus very simple to use and to understand. Especially if the assistance session is initiated by an operator as it then does not require any action by the visitor. Furthermore no code sharing is needed to effectuate the sharing according to the teachings herein. This speeds up the assistance session and it also improves the security as there is no password code than can be copied or stolen. As the sharing does not exchange any data between the two terminals apart from graphic data, there is no additional risk that a terminal is subjected to misuse as in the prior art.

Another benefit lies in that no direct connection between the operator and the visitor terminal is established. Only the graphical view of a web browser window is shared. Thus, there may be no need to circumvent any (additional) firewalls as in the prior art and it does not allow another terminal to gain control over the visitor terminal and no changes may be needed in the visitors network setup.

Another benefit of the teachings herein lies in that by using the already established web browser connection established between the visitor and the server no further protocols need to be implemented or installed on the visitor side. This also enables the operator to be independent on the visitor's operating system. All data transformations and transfers are already taken care of by the internet protocol. The teachings herein thus also solve the problem of how to allow the operator to share data with any visitor regardless of the operating system. A manner of sharing data, such as disclosed herein, thus becomes easy and thereby cheap to install at an operator side as only the version of the operator's operating system need to be implemented or installed.

The teachings herein find use in online services such as online shops, registrations, ordering services or other services including public, governmental and private services.

Other features and advantages of the disclosed embodiments will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The actions of any method disclosed herein do not have to be performed in the exact order disclosed, unless explicitly stated.

### BRIEF DESCRIPTION OF DRAWINGS

The invention will be described in further detail under reference to the accompanying drawings in which:
Figure 1 is a schematic view of a terminal according to the teachings herein;
Figure 2 is a schematic view of the components of a terminal according to the teachings herein;
Figure 3 is a schematic view of a general view of a computer network according to the teachings herein;
Figure 4 shows general view of a system according to one embodiment of the teachings of this application;
Figure 5 shows a general view of a system according to one embodiment of the teachings of this application;
Figure 6 shows a general view of a system according to one embodiment of the teachings of this application;
Figure 7a and 7b each shows a schematic view of a data flow model according to one embodiment of the teachings of this application;
Figure 8a, 8b and 8c each shows a schematic view of an interface according to one embodiment of the teachings of this application; and
Figure 9 is a flowchart for a method according to one embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

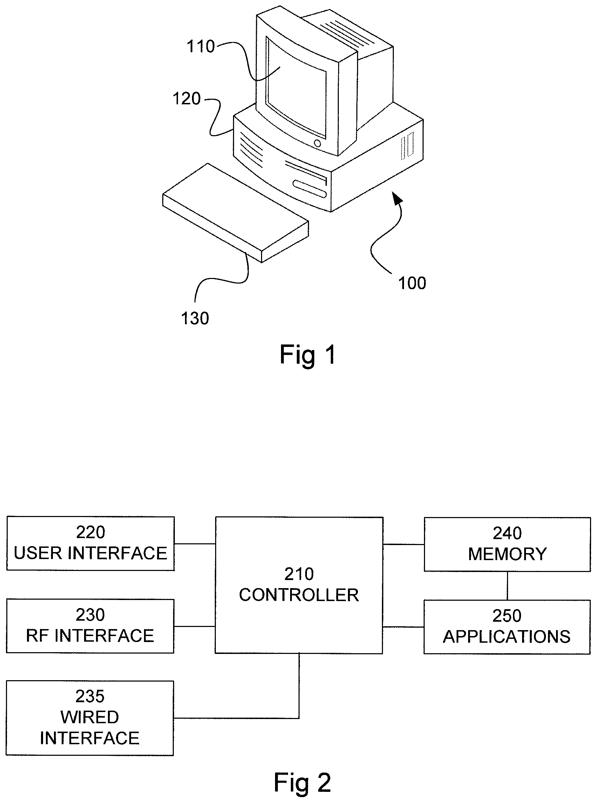

Figure 1 shows a communications apparatus 100 according to an embodiment herein. In one embodiment the communication apparatus 100 is configured for network communication, either wireless or wired. In one embodiment the communication apparatus 100 is configured for network communication, both wireless and wired. Examples of such a communication apparatus 100 are: a personal computer, desktop or laptop, an internet tablet, a mobile telephone, a smart phone, a personal digital assistant and a work station.

The communication apparatus 100 will hereafter be exemplified and described as being a personal computer 100. The personal computer or terminal 100 comprises a display 110 and a housing 120. The housing comprises a controller or CPU (not shown) and one or more computer-readable storage mediums (not shown), such as storage units and internal memory. Examples of storage units are disk drives or hard drives. The terminal 100 further comprises at least one data port. Data ports can be wired and/or wireless. Examples of data ports are USB (Universal Serial Bus) ports, Ethernet ports or Wi-Fi (according to IEEE standard 802.11) ports. Data ports are configured to enable a terminal 100 to connect with other terminals or a server.

The terminal 100 further comprises at least one input unit such as a keyboard 130. Other examples of input units are computer mouse, touch pads, touch screens or joysticks to name a few.

Figure 2 shows a schematic view of the general structure of a terminal according to figure 1. The terminal 200 comprises a controller 210 which is responsible for the overall operation of the terminal 200 and is preferably implemented by any commercially available CPU ("Central Processing Unit"), DSP ("Digital Signal Processor") or any other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the terminal 200. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The terminal 200 further comprises one or more applications 250. The applications are sets of instructions that when executed by the controller 210 control the operation of the terminal 200. The memory 240 is used for various purposes by the controller 210, one of them being for storing application data and program instructions 250 for various software modules in the terminal 200. The software modules include a real-time operating system, drivers for a man-machine interface 220, an application handler as well as various applications 250. The applications 250 can include a messaging application such as electronic mail, a browsing application, a media player application, as well as various other applications 250, such as applications for voice calling, video calling, document reading and/or document editing, an instant messaging application, a calendar application, a control panel application, one or more video games, a notepad application, etc.

The terminal 200 further comprises a user interface 220, which in
the terminal 100 of figure of 1, is comprised of the display 110, the keypad 130. The user interface (UI) 220 also includes one or more hardware controllers, which together with the UI drivers cooperate with the display 110, keypad 130, as well as various other I/O devices such as sound system, LED indicator, etc. As is commonly known, the visitor may operate the terminal 200 through the man-machine interface thus formed.

The terminal 200 further comprises a radio frequency interface 230,
which is adapted to allow the terminal to communicate with other devices through a radio frequency band through the use of different radio frequency technologies. Examples of such technologies are WIFI, Bluetooth®, W-CDMA, GSM, UTRAN, LTE, and NMT to name a few.

The terminal 200 further comprises a wired interface 235,
which is adapted to allow the terminal to communicate with other devices through the use of different network technologies. Examples of such technologies are USB, Ethernet, and Local Area Network, TCP/IP (Transport Control Protocol/Internet Protocol) to name a few.

The controller 210 is configured to operably execute applications 250 such as the web browsing or email application through the RF interface 230 and/or the wired interface 235 using software stored in the memory 240 which software includes various modules, protocol stacks, drivers, etc. to provide communication services (such as transport, network and connectivity) for the RF interface 230 and the wired interface 235, and optionally a Bluetooth interface and/or an IrDA interface for local connectivity. The RF interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, i.e., band pass filters, amplifiers, mixers, local oscillators, low pass filters, AD/DA converters, etc.

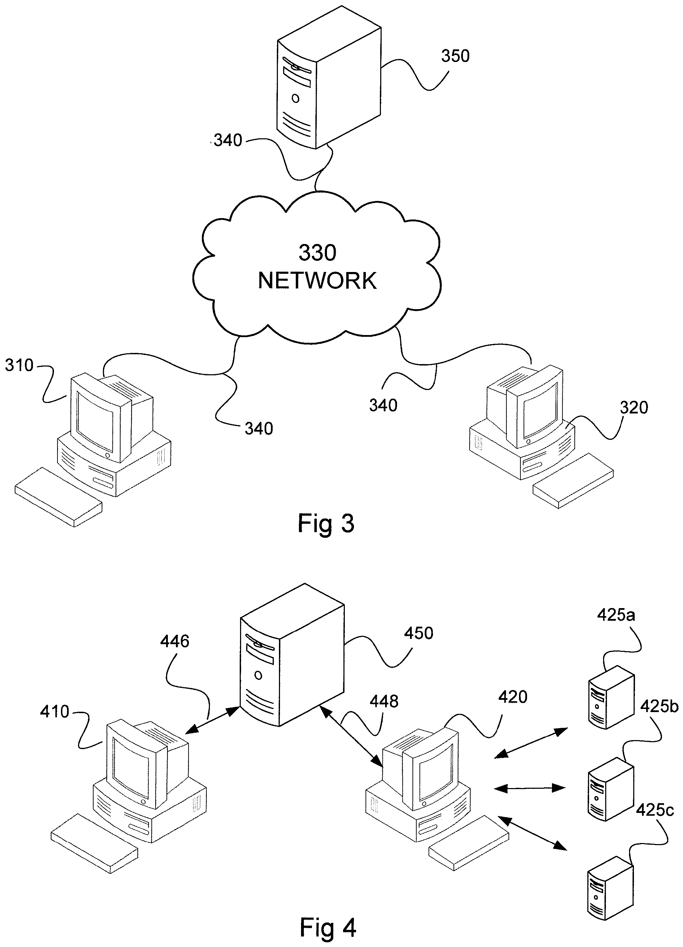

Figure 3 shows a schematic overview of a computer network 300 according to an embodiment herein. A terminal 310, 320, such as the terminals 100, 200 of figures 1 or 2, is connected to the internet 330. In figure 3 there are two terminals 310 and 320. The computer network further comprises at least one server 350. In figure 3 only one server 350 is shown, but it should be noted that any number of servers 350 may be implemented in a computer network 300. Generally a server is a physical computer (a hardware system) dedicated to running one or more services (as a host), to serve the needs of visitors of the other computers or terminals 310, 320 on the network 300. Depending on the computing service that it offers it could be a database server, file server, mail server, print server, web server, or other.

In one embodiment the server 350 is a web server 350. Generally, a web server 350 can refer to either hardware (a computer) or software (a computer application) that helps to deliver content that can be accessed through the Internet 330.

The Internet 330 is a global system of interconnected computer networks that use the standard Internet protocol suite (TCP/IP - Transmission Control protocol/Internet Protocol) to serve billions of visitors worldwide. It is a network of networks that consists of millions of private, public, academic, business, and government networks, of local to global scope, that are linked by a broad array of electronic, wireless and optical networking technologies. The Internet carries a vast range of information resources and services, such as the inter-linked hypertext documents of the World Wide Web (WWW) and the infrastructure to support communication applications such as email and Voice over Internet Protocol (VoIP) to name a few. The communications infrastructure of the Internet 330 consists of its hardware components; such as servers and terminals and a system of software layers arranged in protocols according to an internet model that control various aspects of the architecture. The most prominent component of the Internet model is the Internet Protocol (IP), which provides addressing systems (IP addresses) for computers on the Internet. In one embodiment the terminals 310, 320 are configured to communicate over the internet through a data channel 340 via a web browser application using a so called WebSocket. WebSocket is a technology providing for bidirectional, full-duplex communications channels, over a single Transmission Control Protocol (TCP) socket. It is designed to be implemented in web browsers and web servers, but it can be used by any client, such as a terminal, or server application. In one embodiment a server 350 is a program or a computer comprising a program that operates as a socket listener.

As would be apparent to a skilled reader, the internet is full of possibilities and variations of how to connect two terminals and the embodiments disclosed herein are or purely exemplary purposes and should not be construed to be limiting.

It should be noted that even though the description below will be given with focus on an online shop the teachings herein are also applicable to any online service that services customers or visitors.

Figure 4 shows a general overview of a client or visitor terminal 410 that is connected to a web service operated and represented by a server 450. Examples of such web services are online shops, online booking systems, online registration systems and online support systems to name a few. As the visitor terminal 410 logs on to or accessed the web service the visitor terminal 410 is identified. The identification can be achieved by the server 450 by registering an IP (Internet Protocol) address, assigning a Session Identifier (SessionID) or in a cookie for the URL (Uniform Resource Locator) address to name a few. The terminal 410 is connected to the web service server 450 over a connection 446 and communicates with the server 450 by sending requests and receives content in response to the requests. In one embodiment the communication is achieved through a protocol: HyperText Transfer Protocol (HTTP) or HyperText Transfer Protocol Secured (HTTPS). HTTP(S) functions as a request-response protocol in the client-server computing model. In HTTP(S), a web browser, for example, such as the visitor terminal 420 acts as a client, while an application running on a computer hosting a web site functions as a server 450. The client 410 submits an HTTP(S) request message to the server 450. The server 450, which stores content, or provides dynamically created resources, such as HTML files, or performs other functions on behalf of the client, returns a response message to the client 410. A response contains completion status information about the request and may contain any content requested by the client in its message body.

In one embodiment the communication over the connection 446 is achieved through an Internet Protocol (IP) transport layer. The Internet Protocol (IP) is the principal communications protocol used for relaying send messages, in this case referred to as datagrams (packets) across an internetwork using the Internet Protocol Suite. Responsible for routing packets across network boundaries, it is the primary protocol that establishes the Internet.

In one embodiment the communication over the connection 446 is achieved through an Internet Protocol Suite or TCP/IP (Transmission Control Protocol) transport layer. The Internet protocol suite is a set of communications protocols used for the Internet and other similar networks. It is commonly known as TCP/IP from its most important protocols: Transmission Control Protocol (TCP) and Internet Protocol (IP), which were the first networking protocols defined in this standard.

In one embodiment the communication over the connection 446 is achieved through a UDP/IP (Transfer Control Protocol) transport layer. The User Datagram Protocol (UDP) is one of the core members of the Internet Protocol Suite. With UDP, computer applications can send datagrams to other hosts on an Internet Protocol (IP) network without requiring prior communications to set up special transmission channels or data paths. This is enabled as UDP uses a simple transmission model without implicit handshaking dialogues for providing reliability, ordering, or data integrity.

In one embodiment the communication over the connection 446 is achieved through a protocol transport layer such as WebSocket (WS/WSS), secure HTTP (HTTPS), network pipes, and flash sockets.

An operator terminal 420 is associated with the server 450. In one embodiment the server 450 and the operator terminal is implemented in one and the same computer arrangement. For illustrative purposes, the server 450 and the operator terminal will be described solely as separate entities. The operator terminal is connected to at least one support database 425. The support databases 425 may be separate systems, external applications, external systems or storage systems stored internally in the operator terminal 420 or the server 450. Examples of support databases 425 include Human Resource systems, credit and banking service systems, image and movie collections to name a few.

A visitor 410 may end up in a situation where he is in need of assistance. One manner of identifying such a client 410 is described in the co-pending application titled DYNAMIC FILTERING AND SORTING OF VISITORS FOR PROVIDING ASSISTANCE by the same applicant. A visitor may also request assistance directly from an operator.

The operator 420 establishes a connection 448, 446, possibly via the server 450, to the visitor 410. The controller 210 of the server 450 is configured to establish the connection by generating a visitor-specific copy of the web service for the identified visitor 410. Through the visitor-specific copy of the web service the server 450 is able to provide the visitor 410 with specific content through an already established communication channel 446 without requiring any authentication to be made. The visitor is thus not required to take any action and the assistance session is passively accepted. Naturally the visitor can actively reject the assistance session, for example by closing the browser or through a rejection prompt provided to the visitor. The server 450 is thus configured to proceed based on a passive acceptance. Furthermore, the server 450 is not granted any general remote access rights to the visitor terminal 410 so there is no additional risk of exposing the visitor terminal 410 to virus attacks. The operator 420 is thus enabled to communicate with the visitor 410 through the visitor-specific copy of the web service.

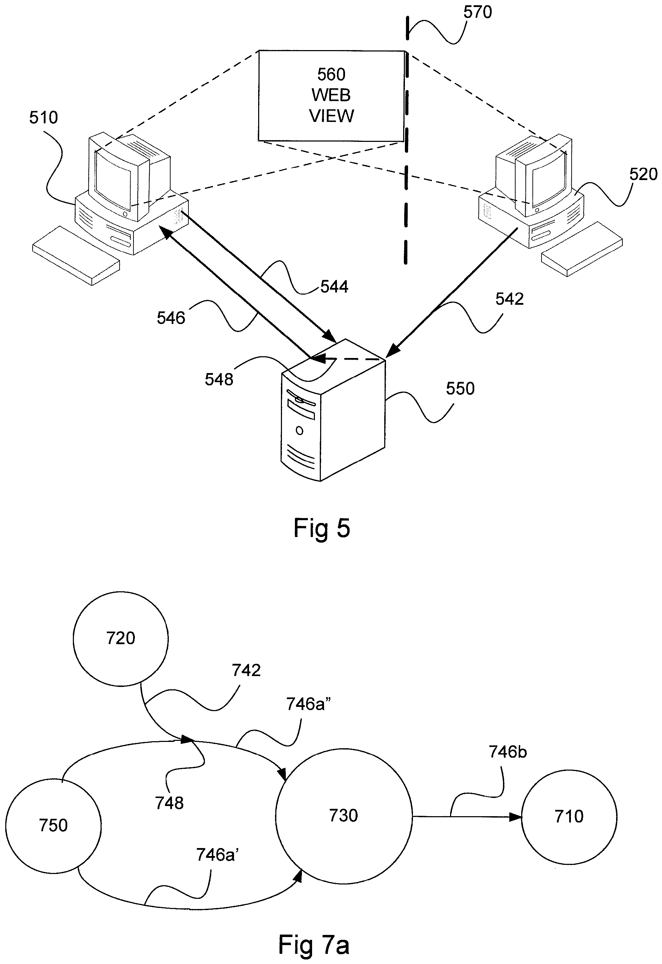

In one embodiment the server 450 is further configured to provide the operator terminal 420 with the same visitor-specific copy of the web service. This is illustrated in figure 5 which shows an overview of a system according to the teachings herein. A visitor terminal 510 is connected to a server 550 for viewing a web page 560. An operator terminal 520 is also connected to the server 550. The visitor terminal 510 pushes requests to the server 550 via an uplink channel 544 and receives responses and data via a downlink channel 546. The division into channels is for illustrative purposes and it should be noted that in some embodiments the downlink channel 546 and the uplink channel 544 are the same channel 546.

While the visitor is viewing a web page the server 550 is configured to send a flow or stream of data to the visitor terminal 410 via the channel 546 which has been established upon log on. The server 550 is configured to receive data from the operator terminal 520 and to inject this data into the flow of data to be streamed or sent to the visitor terminal 510. The injection of data is illustrated in figure 5 by the dashed line 548. By injecting the data into an already established data flow no further trust relationship needs to be established nor does the visitor need to undertake any further action.

As the injection is performed within the server 550, the server 550 is able to check the injected data for any potential threats, such as viruses, before injecting the data into the data flow. Furthermore, the authors of this application have realized after insightful reasoning that by utilizing the already established connection and trust relationship between the server 550 and the visitor terminal 510 there is no need to install a further protocol for handling the sharing of data. The data transformations necessary are already being handled by the internet protocols used. This simple and elegant solution thereby renders the data sharing independent on the operating system of the visitor terminal 510 and an operator terminal 520 is able to share data with any visitor terminal 510 without additional modification.

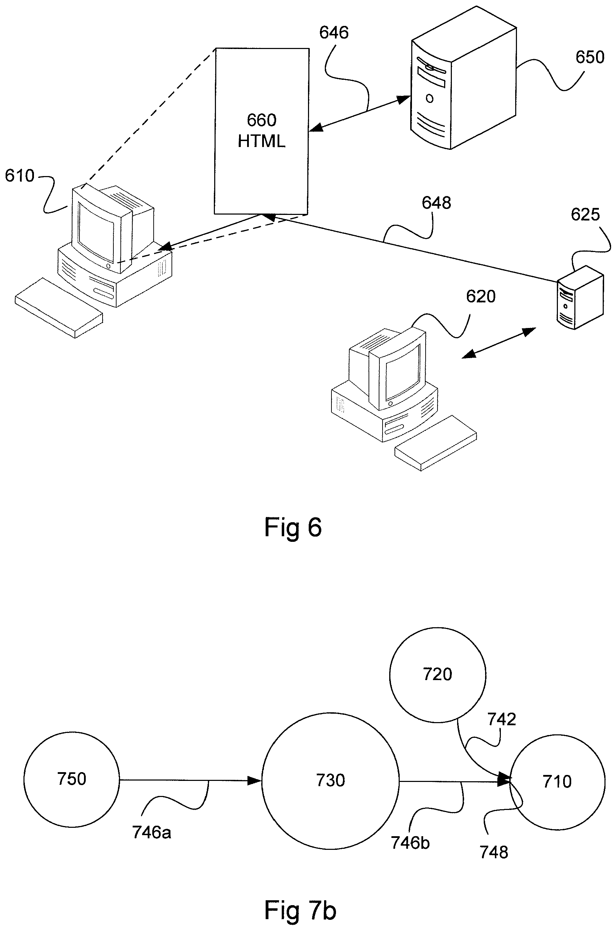

Figure 7A shows a schematic view of a data flow according to the teachings herein. A visitor 710 is receiving and viewing content from an internet source through a channel 746b. The content is provided by a server 750 through a channel 746a'. In one embodiment the channel 746a and 746b are the same channels. As the visitor is to be assisted a visitor-specific copy of the web page is generated. In figure 7 this is illustrated by the alternative data channel 746a" An operator 720 sends data over a channel 742 and the data are injected at an injection point 748 into the data flow 746a".

Returning to figure 5 the operator terminal 520 and the visitor terminal 510 are now sharing a view of the web service as is illustrated by the web view 560. Through this shared web view 560 the operator can guide the visitor without taking any control of any feature on the visitor terminal 510. All actions are undertaken at the server 550.

In one embodiment the operator terminal 420 is configured to inject the data into the dataflow at the visitor terminal 410. Figure 6 shows a general view of a system according to the teachings herein. A visitor terminal 610 is connected to or logged on to a network service, such as a web service, hosted by a server 650. In this example the visitor terminal issues requests relating to the network service from the server 650 through a connection 646. The visitor terminal 610 requests a page from the server 650 which in response thereto provides the visitor terminal 610 with for example a webpage 660 having HyperText Markup language (HTML) content. A web page with HTML content is defined by HTML source code and meta data that is provided from the server 650 to the visitor terminal 610. Other code formats may also be used such as JavaScript or any other client side script language. A browser application in the visitor terminal 610 parses and executes the HTML code and presents a web page 660 accordingly (indicated by the dashed lines in figure 6). In one embodiment the content received by the visitor terminal 610, such as the HTML code, comprises a script tag that when executed causes the visitor terminal 610 to request that a connection 648 between the visitor terminal 610 and an operator terminal 620 is established thereby allowing a (parallel) data flow to be established between the operator terminal 620 and the visitor terminal 610. The operator terminal 620 is thus enabled to send data to the visitor terminal 610. The visitor terminal is identified by the operator terminal 620 as the script tag is executed and the connection is established. The connection 648 between the operator terminal 620 and the visitor terminal 610 is established through a communication server 625. This provides security for the visitor terminal 610 and the operator terminal 620 in that no direct connection is established. This also has the benefit of simplifying establishing the connection 648 by utilizing existing communication servers that are already part of the network employed for the communication in that the communication server is arranged to handle communication between two terminals having different operating systems or such thereby enabling communication between the two terminals without requiring any modifications to either's network settings. In this embodiment the injection of data into the data flow is achieved by manipulation of the data at the visitor terminal 610 by the operator terminal 620. The operator terminal is thus not allowed any remote access to the visitor terminal 610; it is only allowed to manipulate content that is to be handled by the browser application. The operator terminal 620 is only allowed to send commands to the browser application of the visitor terminal and only for presenting or requesting data such as images, videos, texts, forms or other content to be presented by a browser application. The only control allowed to the operator terminal is thus intrinsically limited to what the web browser is to present within a visitor-specific copy. The authors have thus realized that by utilizing the browser and its capabilities to instruct a terminal to request that a connection and to render and present data that is provided within a page a simple and elegant solution is achieved that requires no additional software to be installed, no changes of network settings and only allows an operator limited control of a visitor terminal thereby also safe guarding the visitor from potential abuse and facilitating the trust relationship.

In such an embodiment the operator terminal 620 is thus configured to generate the visitor-specific copy of the service by injecting commands into the source code that is executed by the browser application at the visitor terminal 610. This is illustrated in figure 7b which shows a schematic view of a data flow according to the teachings herein. In figure 7b the data from the operator terminal 720 is injected at the visitor terminal 710 at an injection point 748. In one embodiment the data is injected through a data flow 742 that is parallel to the data stream 746 coming from the server 750 through a network 730.

In one embodiment the script tag is arranged early or at the start of the source code. This enables the visitor terminal 610 to establish the connection 648 to the operator terminal 620 before any source code has been executed and thereby allows the operator terminal to directly inject data into the data flow.

In one embodiment the script tag is arranged late or at the end of the source code. In such an embodiment the visitor terminal 610 establishes the connection 648 to the operator terminal 620 after the source code has been executed and thereby allows the operator terminal to inject data, such as commands, pictures, etc, into the data flow by manipulating the data that is to be presented.

The operator terminal 620 is thereby also enabled to provide a complete visitor-specific copy by exchanging the total content of the HTML document.

A visitor will not be able to discern where the data is injected into the dataflow due to the fast processing of modern controllers and the choice of where to inject the data is up to the system designer and depends on factors such as security issues, customer desires to name a few.

As the operator controls the generation of the visitor-specific copy the sharing is implicit in that the operator terminal 620 already has all the necessary code for rendering the visitor-specific copy. Should the operator terminal 620 require additional data, such as source code, images or other media, such additional data can be requested from the server 650.

In the embodiments disclosed with reference to figure 6 the server has included the script tag in the source code and as the script tag is operator specific the server 650 already has a trust-relationship with the operator 620 and there is no need to establish any additional trust relationship, such as additional log in procedures, password exchanges or similar authentications. As for the embodiments disclosed with reference to figure 5, the authors of this application have realized after insightful reasoning that by utilizing the already established connection and trust relationship between the server 650 and the visitor terminal 610 there is no need to install a further protocol for handling the sharing of data. It should be noted though that different protocols may be used, but commonly a browser application is adapted to be able to handle more than one protocol such as for example both HTTP and HTTPS. The data transformations necessary are already being handled by the (internet) protocols used. This simple and elegant solution thereby renders the data sharing independent on the operating system of the visitor terminal 610 and an operator terminal 620 is able to share data with any visitor terminal 510 without additional modification.

In one embodiment the visitor terminal 510, 610 is further configured to receive instructions from an operator on what data to inject into the data flow. Examples of these data are images, movies, documents, such as PDF, or forms. The operator terminal 520, 620 is further configured to retrieve the data from any one of the support data bases 425 (not shown in fig 6) to be injected in the data flow. Examples of such support databases 425 are CRM (Customer Relationship Management) systems and ERP (Enterprise Resource Planning) systems to name a few. In one embodiment the operator terminal 520, 620 is arranged to extract fields on a form and to analyze these fields and

generate a meta copy of or a rendering template for the form and to inject this meta copy of or rendering template for the form in the data flow for the visitor to fill in. The filled-in rendering template form is returned to the operator terminal 520, 620 possibly through the server 550 and the operator terminal 520, 620 is configured to fill in the form according to the filled-in rendering template copy. More details on this are disclosed in the co-pending application titled DYNAMIC SHARING AND UPDATING OF AN ELECTRONIC FORM by the same applicant. In one embodiment the controller 210 of the operator terminal 520, 620 is configured to detect that an operator is placing a data object to be injected on a user interface window arranged to display the visitor-specific copy of the web service and in response thereto inject the data relating to the data object in the data flow as has been described above. In one embodiment the operator terminal 520, 620 is configured to allow an operator to place an object on the window by a drag-and-drop action. Other examples of how an operator can indicate or provide data to be injected is through selecting objects and selecting a share option or through a text field to name a few options.

In one embodiment the operator terminal 620 is configured to receive an address to the page that the visitor terminal is currently accessing or logged on to and access and render it on the operator terminal 620. This enables the operator to see the same page as the visitor but without the need for sending all the content through the communication server.

The arrangement of figures 5 and 6 allows for the visitor and operator to dynamically update and share a web page view without any terminal gaining control over the other terminal or any data being sent between the terminals directly. This allows for a secure connection between the two terminals which is illustrated in figure 5 by the dashed line 570 indicating a data wall being erected between the two terminals at the shared web view 560.

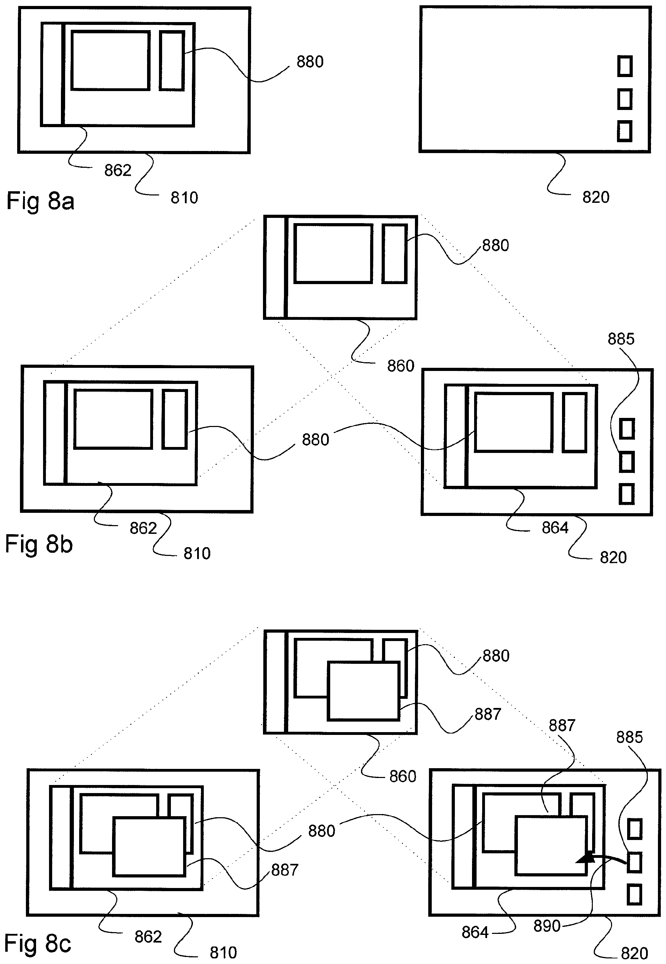

Figure 8 shows an illustration of how a web page is shared between a visitor and an operator on a user interface level. The user interface experience described below is unaffected by which data injection embodiment that is chosen for the implementation and the user interface will be described with simultaneous reference to figures 4, 5 and 6 accordingly. The figure reference will be indicative of which data injection is relevant for the disclosure made. In figure 8a a display screen 810 of a visitor terminal is shown. Displayed on the display screen 810 is a user interface window 862 for a web browser. In the window 862 a number of objects 880 are displayed.

At some point, for some reason the visitor initiates an assistance session which alerts an operator. The operator accepts the assistance session. It should be noted that the operator could have been the one to initiate the assistance session. Figure 8b shows how the operator has opened up a web browser window 864 on a display screen 820 of an operator terminal. A server, 550 in figure 5, or an operator terminal, 620 of figure 6, generates a visitor-specific copy of the web page and the server 550 or the operator terminal 620 arranges so that the visitor terminal 410 and the operator terminal 420 shares a view 860 of the visitor-specific copy as is indicated by the dashed lines in figure 8. As can be seen in figure 8b the web browser window 862 of the visitor terminal 410, the web browser window 864 of the operator terminal 420 and the shared view 860 all contain the same objects 880. Examples of objects displayed are images, texts, movies, documents or forms to name a few. Also displayed on the operator's display screen 820 is an additional, possibly external, object 885. Data associated with the additional object 885 may be retrieved from an internal or an external source such as a support data base 425. The operator, wanting to show the visitor, for example, an instructional video, a document containing further details or a form to be filled out as disclosed in DYNAMIC SHARING AND UPDATING OF AN ELECTRONIC FORM locates the corresponding additional object 885, selects it and instructs the server 550 or the operator terminal 620 to inject the data associated with the additional object 885 in the data flow. In the example of figure 8 the operator does this by a drag-and-drop action as indicated by the arrow 890 in figure 8c, indicating a movement of the additional object 885. The operator terminal 420 is in one embodiment configured to determine a position for the additional object 885 and instructing the server 550 or the visitor terminal 610 to display an object 887 corresponding to the additional object 885at the position in the shared web view 860. In one embodiment the position corresponds to the position at which the additional object 885 was dropped on in the operator's web browser window 864. It should be noted and as is clear from figure 8 that the visitor terminal 410 and the operator terminal 420 does not share any data with each other, such as a screen sharing, nor is any terminal allowed to take control over the other terminal. As is clear from figure 8 the terminals only share data through the visitor-specific copy 860 possibly through the server 550.

The server 550 or the operator terminal 620 injects the data associated with the additional object 885 into the data flow of the visitor-specific copy 860 and the corresponding object 887 appears on the visitor's display screen 810 and also on the operators display screen 820 as is illustrated in figure 8c.

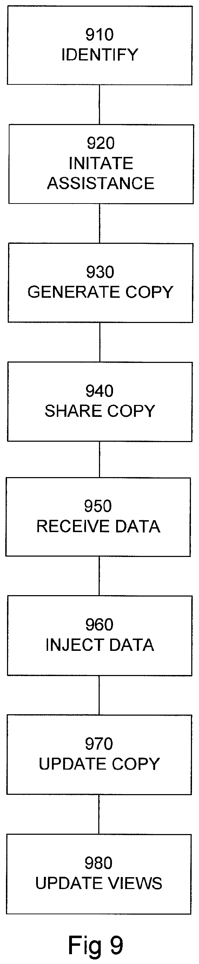

Figure 9 shows a flow chart for an example method of the teachings disclosed herein. A visitor terminal is identified 910 (IDENTIFY) as it accesses or logs on to a web service. An assistance session is initiated 920 (INITIATE ASSISTANCE) and a server or an operator terminal generates a visitor-specific copy of the web service 930 (GENERATE COPY). The visitor-specific copy is shared 940 (SHARE COPY) by the visitor and an operator. In one embodiment the sharing is effectuated by the server streaming or sending data regarding the visitor-specific copy to the visitor and the operator. In one embodiment the sharing is effectuated by the operator streaming or sending data regarding the visitor-specific copy to the visitor. Should the operator or the visitor send a request regarding the visitor-specific copy both the operator's and the visitor's view of the visitor-specific copy are updated with the corresponding response. The operator receives or selects data 950 (RECEIVE DATA) and possibly sends data to the server and the data is injected 960 (INJECT DATA) into the data flow or data channel for the visitor-specific copy. The visitor-specific copy is updated accordingly 970 (UPDATE COPY) and both the operator's and the visitor's view is updated accordingly 980 (UPDATE VIEWS).

One benefit of the teachings herein is that an operator is enabled to update a visitor's view without taking control of any part of the visitor's terminal. The operator is further able to do this for one or more specific and targeted visitors. The visitor does not have to take any special action at all, but simply remains logged on to the same web site. This is thus very simple to use and to understand. Especially if the assistance session is initiated by an operator as it then does not require any action by the visitor. Furthermore no password code sharing is needed to effectuate the sharing according to the teachings herein. This speeds up the assistance session and it also improves the security as there is no password code than can be copied or stolen. As the sharing does not exchange any data between the two terminals apart from graphic or rendering data, there is no additional risk that a terminal is subjected to misuse as in the prior art systems where a visitor terminal is rendered open for remote access and control.

Another benefit lies in that no direct connection between the operator and the visitor terminal is established. Only the graphical view of a web browser window is shared. Thus, there may be no need to circumvent any firewalls as in the prior art and it does not allow another terminal to gain control over the visitor terminal.

Another benefit of the teachings herein lies in that by using the already established web browser connection established between the visitor and the server no further protocols need to be implemented or installed on the visitor side. This also enables the operator to be independent on the visitor's operating system. All data transformations and transfers are already taken care of by the internet protocol. The teachings herein thus also solve the problem of how to allow the operator to share data with any visitor regardless of the operating system. A manner of sharing data, such as disclosed herein, thus becomes easy and thereby cheap to install at an operator side as only the version of the operator's operating system need to be implemented or installed.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. An apparatus (420, 620) comprising a memory (240) and a controller (210), wherein said controller (210) is configured to:
identify at least one visitor terminal (410, 610) accessing a web service;
generate a visitor-specific copy of said web service;
share said visitor-specific copy between said at least one visitor terminal (410, 610) and an operator terminal (420, 620);
receive additional data and to inject said additional data into a data flow (746) from a server (450, 650) to said visitor terminal (410, 610) to provide said visitor terminal (410, 610) with an updated visitor-specific copy of said web service.;
wherein said apparatus is the operator terminal (420, 620) and said controller (210) is further configured to:
provide a script tag to the server (450, 650) for inclusion in a web service, which script tag enables said visitor terminal (410, 610) to request establishment of a connection (648) between the operator terminal (420, 620) and the visitor terminal (410, 610) through a communication server (625);
establish said connection (648) and
inject said additional data into said dataflow (746) through said connection (648).

2. The operator terminal (420, 620) according to claim 1, wherein said controller is configured to cause an application, such as a web browser, at the visitor terminal (410, 610) to generate said visitor-specific copy by injecting data and commands in said data flow (746).

3. The apparatus (420, 620) according to any of claims 1 to 2, wherein said additional data originates from an external support database, system or application (425).

4. The apparatus (420, 620) according to any of claims 1 to 3, wherein said controller (210) is further configured to establish said data flow over an internet protocol.

5. The apparatus (420, 620) according to claim 4, wherein said internet protocol is an IP protocol.

6. The apparatus (420, 620) according to claim 4, wherein said internet protocol is a TCP/IP protocol or UDP/IP protocol.

7. The apparatus (420, 620) according to claim 4, wherein said internet protocol is any taken from the protocol group comprising: HTTP, HTTPS, WebSocket, NetworkPipes and Flash sockets.

8. The apparatus (420, 620) according to any of claims 1 to 7, wherein said controller (210) is further configured to establish said data flow (746) based on a passive acceptance.

9. A method comprising:
identifying at least one visitor terminal (410, 610) accessing a web service;
generating a visitor-specific copy of said web service; and
sharing said visitor-specific copy between said at least one visitor terminal (410, 610) and an operator terminal (420, 620);
receive additional data and to inject said additional data into a data flow (746) from a server (450, 650) to said visitor terminal (410, 610) to provide said visitor terminal (410, 610) with an updated visitor-specific copy of said web service;
provide a script tag to the server (450, 650) for inclusion in a web service, which script tag enables said visitor terminal (410, 610) to request establishment of a connection (648) between the operator terminal (420, 620) and the visitor terminal (410, 610) through a communication server (625);
establish said connection (648) and
inject said additional data into said dataflow (746) through said connection (648).

10. A computer readable storage medium encoded with instructions that, when executed on a processor, performs the method according to claim 9.

## Patentansprüche

1. Einrichtung (420, 620) umfassend einen Speicher (240) und eine Steuerung (210), wobei die Steuerung (210) ausgelegt ist zum:
Identifizieren mindestens eines Besucherterminals (410, 610), der auf einen Webdienst zugreift;
Erzeugen einer besucherspezifischen Kopie des Webdiensts;
Verteilen der besucherspezifischen Kopie unter dem mindestens einen Besucherterminal (410, 610) und einem Betreiberterminal (420, 620);
Empfangen von zusätzlichen Daten und Einführen der zusätzlichen Daten in einen Datenfluss (746) von einem Server (450, 650) zum Besucherterminal (410, 610), um den Besucherterminal (410, 610) mit einer aktualisierten besucherspezifischen Kopie des Webdiensts zu versehen;
wobei die Einrichtung der Betreiberterminal (420, 620) ist und die Steuerung (210) weiter ausgelegt ist zum:
Bereitstellen eines Script-Tags für den Server (450, 650) für den Einschluss in einen Webdienst, welches Script-Tag es dem Besucherterminal (410, 610) ermöglicht, Aufbau einer Verbindung (648) zwischen dem Betreiberterminal (420, 620) und dem Besucherterminal (410, 610) durch einen Kommunikationsserver (625) anzufordern;
Aufbauen der Verbindung (648) und
Einführen der zusätzlichen Daten in den Datenfluss (746) durch die Verbindung (648).

2. Betreiberterminal (420, 620) nach Anspruch 1, wobei die Steuerung dafür ausgelegt ist, zu bewirken, dass eine Applikation, wie beispielsweise ein Webbrowser, am Besucherterminal (410, 610) die besucherspezifische Kopie durch Einführen von Daten und Befehlen in den Datenfluss (746) erzeugt.

3. Einrichtung (420, 620) nach einem der Ansprüche 1 bis 2, wobei die zusätzlichen Daten von einer externen Support-Datenbank, System oder Applikation (425) stammen.

4. Einrichtung (420, 620) nach einem der Ansprüche 1 bis 3, wobei die Steuerung (210) weiter dafür ausgelegt ist, den Datenfluss über ein Internet-Protokoll aufzubauen.

5. Einrichtung (420, 620) nach Anspruch 4, wobei das Internet-Protokoll ein IP-Protokoll ist.

6. Einrichtung (420, 620) nach Anspruch 4, wobei das Internet-Protokoll ein TCP/IP-Protokoll oder UDP/IP-Protokoll ist.

7. Einrichtung (420, 620) nach Anspruch 4, wobei das Internet-Protokoll irgendeines ist aus der Protokollgruppe umfassend: HTTP, HTTPS, Web-Sockel, NetworkPipes und Flash-Sockel.

8. Einrichtung (420, 620) nach einem der Ansprüche 1 bis 7, wobei die Steuerung (210) weiter dafür ausgelegt ist, den Datenfluss (746) auf Basis einer passiven Annahme aufzubauen.

9. Verfahren umfassend:
Identifizieren mindestens eines Besucherterminals (410, 610), der auf einen Webdienst zugreift;
Erzeugen einer besucherspezifischen Kopie des Webdiensts; und
Verteilen der besucherspezifischen Kopie unter dem mindestens einen Besucherterminal (410, 610) und einem Betreiberterminal (420, 620);
Empfangen von zusätzlichen Daten und Einführen der zusätzlichen Daten in einen Datenfluss (746) von einem Server (450, 650) zum Besucherterminal (410, 610), um den Besucherterminal (410, 610) mit einer aktualisierten besucherspezifischen Kopie des Webdiensts zu versehen;
Bereitstellen eines Script-Tags für den Server (450, 650) für den Einschluss in einen Webdienst, welches Script-Tag es dem Besucherterminal (410, 610) ermöglicht, Aufbau einer Verbindung (648) zwischen dem Betreiberterminal (420, 620) und dem Besucherterminal (410, 610) durch einen Kommunikationsserver (625) anzufordern;
Aufbauen der Verbindung (648) und
Einführen der zusätzlichen Daten in den Datenfluss (746) durch die Verbindung (648).

10. Computerlesbares Speichermedium, kodiert mit Anweisungen, das beim Ausführen auf einem Prozessor das Verfahren nach Anspruch 9 durchführt.

## Revendications

1. Dispositif (420, 620) comprenant une mémoire (240) et un contrôleur (210), dans lequel ledit contrôleur (210) est configuré pour:
identifier au moins un terminal de visiteur (410, 610) qui accède à un service Web;
générer une copie spécifique du visiteur de ce service Web;
partager ladite copie spécifique au visiteur entre ledit au moins un terminal de visiteur (410, 610) et un terminal d'opérateur (420, 620);
recevoir des données supplémentaires et pour injecter lesdites données supplémentaires dans un flux de données (746) à partir d'un serveur (450, 650) vers ledit terminal de visiteur (410, 610) afin de fournir audit terminal de visiteur (410, 610) une copie mise à jour spécifique au visiteur dudit service Web;
dans lequel ledit dispositif est le terminal d'opérateur (420, 620) et ledit contrôleur (210) est en outre configuré pour:
fournir une étiquette de script au serveur (450, 650) pour l'inclusion dans un service Web, ladite étiquette de script permettant audit terminal de visiteur (410, 610) de demander l'établissement d'une connexion (648) entre le terminal d'opérateur (420, 620) et le terminal de visiteur (410, 610) par un serveur de communication (625);
établir ladite connexion (648) et
l'injecter lesdites données supplémentaires dans ledit flux de données (746) à travers ladite connexion (648).

2. Terminal opérateur (420, 620) selon la revendication 1, dans lequel ledit contrôleur est configuré pour amener une application, telle qu'un navigateur Web, au terminal visiteur (410, 610) de manière à générer ladite copie spécifique au visiteur en injectant des données et des commandes dans ledit flux de données (746).

3. Dispositif (420, 620) selon l'une quelconque des revendications 1 à 2, dans lequel lesdites données supplémentaires proviennent d'une base de données, d'un système ou d'une application de support externe (425).

4. Dispositif (420, 620) selon l'une quelconque des revendications 1 à 3, dans lequel ledit contrôleur (210) est en outre configuré pour établir ledit flux de données sur un protocole Internet.

5. Dispositif (420, 620) selon la revendication 4, dans lequel ledit protocole Internet est un protocole IP.

6. Dispositif (420, 620) selon la revendication 4, dans lequel ledit protocole Internet est un protocole TCP / IP ou un protocole UDP / IP.

7. Dispositif (420, 620) selon la revendication 4, dans lequel ledit protocole Internet est l'un quelconque choisi dans le groupe de protocole comprenant: HTTP, HTTPS, WebSocket, NetworkPipes et Flash sockets.

8. Dispositif (420, 620) selon l'une quelconque des revendications 1 à 7, dans lequel ledit contrôleur (210) est en outre configuré pour établir ledit flux de données (746) en fonction d'une acceptation passive.

9. Procédé, comprenant:
l'identification d'au moins un terminal de visiteur (410, 610) qui accède à un service Web;
la génération d'une copie spécifique du visiteur de ce service Web; et
le partage de ladite copie spécifique au visiteur entre ledit au moins un terminal de visiteur (410, 610) et un terminal d'opérateur (420, 620);
la réception de données supplémentaires et l'injection desdites données supplémentaires dans un flux de données (746) à partir d'un serveur (450, 650) vers ledit terminal de visiteur (410, 610) afin de fournir audit terminal de visiteur (410, 610) une copie mise à jour spécifique au visiteur dudit service Web;
la fourniture d'une étiquette de script au serveur (450, 650) pour l'inclusion dans un service Web, ladite étiquette de script permettant audit terminal de visiteur (410, 610) de demander l'établissement d'une connexion (648) entre le terminal d'opérateur (420, 620) et le terminal de visiteur (410, 610) par un serveur de communication (625);
l'établissement de ladite connexion (648) et
l'injection desdites données supplémentaires dans ledit flux de données (746) à travers ladite connexion (648).

10. Support de stockage lisible par ordinateur codé avec des instructions qui, lorsqu'il est exécuté sur un processeur, exécute le procédé selon la revendication 9.
